Europäisches Patentamt

European Patent Office

Office européen des brevets

(19)

(11) Numéro de publication : **0 022 400**
**B1**

(12) FASCICULE DE BREVET EUROPÉEN

(45) Date de publication du fascicule du brevet :
28.12.83

(51) Int. Cl.³ : **B 65 D 88/32**, B 65 D 90/48

(21) Numéro de dépôt : 80400966.0

(22) Date de dépôt : 27.06.80

(54) Dispositif de sélection et d'alimentation automatique des réservoirs d'un ensemble.

(30) Priorité : 29.06.79 FR 7916883

(43) Date de publication de la demande :
14.01.81 Bulletin 81/02

(45) Mention de la délivrance du brevet :
28.12.83 Bulletin 83/52

(84) Etats contractants désignés :
AT BE CH DE GB IT LI LU NL SE

(56) Documents cités :
CH-A- 474 437
DE-A- 1 932 359
DE-A- 2 312 358
FR-A- 1 488 248
FR-A- 1 589 104

(73) Titulaire : O.C.C.R. INTER G. (Société Anonyme)
3, rue Henri Heine
F-75016 Paris (FR)

(72) Inventeur : Solal, Reynald
24, Rue du Coteau
F-92370 Chaville (FR)

(74) Mandataire : Laget, Jean-Loup et al
Cabinet Pierre Loyer 18, Rue de Mogador
F-75009 Paris (FR)

Dispositif de sélection et d'alimentation automatique des réservoirs d'un ensemble

L'invention concerne un dispositif de sélection et d'alimentation automatique des réservoirs d'un ensemble, et plus particulièrement de réservoirs de stockage temporaire de produits pulvérulents ou granuleux. Ces réservoirs, qui sont par exemple des silos ou des trémies, sont en général alimentés par le haut et vidés par le bas, avec des débits d'alimentation et de vidage très différents et essentiellement variables.

Le problème qui se pose est celui du remplissage de ces réservoirs. Il importe en effet de remplir en priorité le réservoir le moins plein d'un ensemble. Si plusieurs réservoirs de l'ensemble sont vidés simultanément, il faut pouvoir les remplir chacun à son tour sans risquer de voir l'un d'entre eux se vider complètement pendant le remplissage d'un autre.

Il est connu, par le brevet français n° 1 589 104 de la demanderesse, un dispositif du type énoncé dans le préambule de la revendication 1. Un tel dispositif permet de sélectionner automatiquement, dans un ensemble de réservoirs, celui dont le niveau est le plus bas, et de provoquer son remplissage. Il comporte un détecteur associé à chaque réservoir et délivrant un signal d'information de niveau, une pluralité de circuits électroniques de sélection comprenant un comparateur, et un circuit susceptible de délivrer un ordre d'alimentation au réservoir sélectionné. Dans ce dispositif de sélection, les niveaux des différents réservoirs sont comparés en cascade de façon à sélectionner un réservoir par élimination successive de tous les autres.

Le but de la présente invention est de prévoir la détermination du réservoir à remplir, indépendamment de l'état des autres réservoirs, par comparaison du signal d'information de niveau de chaque réservoir avec un signal élaboré à partir d'une tension stabilisée qui soit le même pour tous les réservoirs.

L'invention a pour objet un dispositif de sélection et d'alimentation automatique de réservoirs d'un ensemble de stockage temporaire de produits pulvérulents ou granuleux, comportant un détecteur associé à chaque réservoir, ledit détecteur délivrant un signal d'information de niveau, une pluralité de circuits électroniques de sélection comprenant un comparateur, et un circuit susceptible de délivrer un ordre d'alimentation au réservoir sélectionné, caractérisé en ce qu'il comporte : pour chaque réservoir, d'une part, un circuit de sélection comprenant un intégrateur d'une tension stabilisée délivrant un signal en dent de scie, le signal précité délivré par chaque intégrateur ayant la même pente, le comparateur sus-mentionné dudit circuit de sélection comparant ledit signal en dent de scie et le signal d'information de niveau en provenance du réservoir associé, et, d'autre part, un circuit précité susceptible de délivrer un ordre d'alimentation au réservoir associé et consistant en un dispositif logique à bascule ; et pour l'ensemble des réservoirs, un circuit de type NAND, présentant autant d'entrées qu'il y a de réservoirs, susceptible d'adresser à tous les circuits de sélection un signal d'inhibition lorsqu'un seul comparateur a déclenché.

Selon d'autres caractéristiques de l'invention :
— le détecteur délivrant un signal d'information de niveau est constitué par un dispositif de pesage ;
— le circuit logique comprend une bascule monostable délivrant un signal au circuit de type NAND, et une bascule bistable délivrant à un relais l'ordre d'alimentation du réservoir ;
— la bascule bistable reçoit des signaux d'inhibition particuliers audit réservoir par l'intermédiaire d'un contact ;
— les signaux d'inhibition particuliers audit réservoir assurent par l'intermédiaire d'une porte électronique de type NAND la remise à zéro de l'intégrateur dudit circuit de sélection.

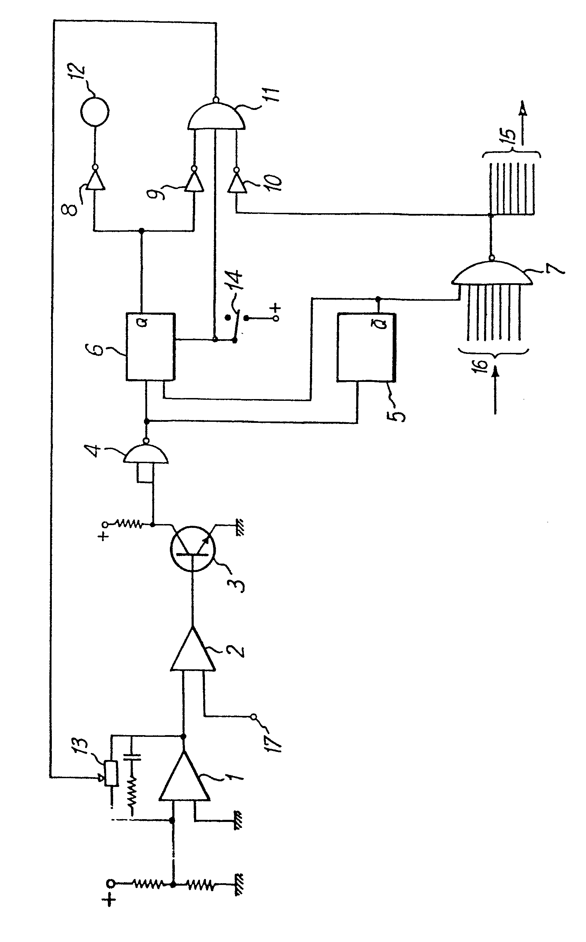

D'autres caractéristiques de l'invention ressortent de la description qui suit faite avec référence au dessin annexé sur lequel on peut voir un schéma symbolique simplifié d'un mode de réalisation d'un circuit électronique de sélection d'un réservoir d'un ensemble, selon l'invention.

Le circuit de la figure unique est décrit dans un exemple d'application à la sélection et au remplissage d'une série de trémies alimentées par des transporteurs à bande. La vidange des trémies est supposé s'effectuer de façon indépendante et à des débits variables.

Chaque trémie est montée sur un ensemble de pesage électronique à détection par jauges de contrainte. Cet ensemble, connu en lui-même, comporte une indication visuelle du poids net de produit dans la trémie, un détecteur de trémie pleine, et une sortie de tension proportionnelle au poids de produit dans la trémie. Cette tension peut varier entre 0 et 10 v. par exemple, elle correspond à l'information relative au poids, c'est-à-dire en quelque sorte au niveau du produit dans la trémie.

Selon l'invention, on alimente les trémies par quantités discrètes de produit, en donnant la priorité de remplissage à la moins pleine, c'est-à-dire à celle dont le niveau est le plus bas, compte tenu des modifications constantes de niveau provoquées par la vidange des trémies.

Dans l'exemple décrit, il n'est pas prévu d'alimenter simultanément plusieurs trémies. Il faut cependant remarquer que le cas de deux trémies est particulièrement simple et répétitible dans une série de trémies. On peut en effet alimenter deux trémies alternativement par le même transporteur à bande, si celui-ci est lui-même alimenté en son milieu et peut être déplacé dans un sens ou dans l'autre pour alimenter une trémie ou l'autre.

Si l'on se reporte au dessin, toute la partie supérieure du circuit concerne une seule trémie. Seule la partie inférieure symbolise la liaison avec les autres trémies. Le circuit électronique comprend essentiellement un intégrateur 1 à impédance d'entrée très élevée, un amplificateur monté en comparateur 2, un transistor 3, une porte NAND (ou NON-ET) 4, une bascule monostable 5, une bascule bistable 6 de type JK, un circuit NAND 7 à plusieurs entrées, une pour chaque trémie, trois circuits inverseurs de puissance 8, 9, 10, une porte NAND 11 à trois entrées et un relais 12.

L'intégrateur 1 intègre une tension positive stabilisée, avec une pente définie par les composants R, C de sa boucle de réaction. Sa constante de temps est de quelques secondes, 3 par exemple. Il est indispensable que la pente soit rigoureusement la même pour tous les circuits de la série de trémies.

Le comparateur 2 reçoit sur son entrée inverse la tension de sortie de l'intégrateur, et sur son autre entrée, la tension d'information 17 relative au poids de produit dans la trémie. Lorsque la tension de sortie de l'intégrateur dépasse la tension d'information de poids, la sortie du comparateur 2 change de niveau et devient positive.

L'application de cette tension positive à la base du transistor 3 rend celui-ci conducteur. La porte NAND 4 reçoit sur ses entrées un signal de niveau 0 puisque le transistor est conducteur. Sa sortie passe donc à l'état 1.

La bascule monostable 5 est alors déclenchée et sa sortie Q̄ passe à l'état 0 pendant une durée déterminée par sa constante de temps de rebasculement. Ce passage à 0 est appliqué à l'entrée du circuit NAND 7, dont la sortie passe à l'état 1. L'inverseur 10 délivre alors un signal à l'état 0 et la porte NAND 11 un signal à l'état 1 de remise à zéro de l'intégrateur 1 par l'intermédiaire d'un transistor à effet de champ 13 par exemple.

Le circuit NAND 7 qui est unique pour toutes les trémies de l'ensemble, délivre le même signal à tous les dispositifs de sélection de l'ensemble de trémies, c'est-à-dire qu'ils sont tous sollicités par un signal de remise à zéro à partir du moment où la trémie la moins pleine a été déterminée par son propre circuit de sélection. Ce signal de remise à zéro adressé aux autres trémies par les sorties 15, interrompt le fonctionnement des intégrateurs de tous les circuits de sélection.

La bascule bistable 6 est déclenchée en même temps que la monostable 5. Sa sortie Q délivre un signal à l'état 1 qui est appliqué aux deux inverseurs 8 et 9. L'inverseur 9 applique un signal à l'état 0 à la porte NAND 11 qui confirme le signal de remise à zéro de l'intégrateur 1. L'inverseur 8 assure l'excitation du relais 12 qui commande l'alimentation de la trémie pendant un temps prédéterminé par l'intermédiaire d'un circuit de puissance non représenté. La bascule bistable 6 est, en outre, soumise à un signal d'inhibition en provenance du contact 14 commandé par un relais non représenté. Les causes d'inhibition sont nombreuses et on peut retenir notamment le fait que la trémie soit hors service, que son système de pesage soit en panne, que son niveau (ou sa charge de produit) soit maximal, ou que son système d'alimentation soit en panne, par exemple. Dans de tels cas, le signal d'inhibition interdit à la bascule bistable 6 de donner l'ordre d'alimentation au relais 12. Parallèlement, le signal d'inhibition correspondant à la position du contact 14 non reliée à la polarisation (c'est-à-dire signal à l'état 0), est appliqué à la porte NAND 11.

Tant que dure une cause d'inhibition, la porte 11 applique donc à l'intégrateur 1 un signal de remise à zéro qui interdit la prise en compte de la trémie dans le cycle de sélection. Dans ce cas, les circuits des autres trémies continuent librement leurs cycles de recherche. Le comparateur de la trémie la moins pleine déclenche le premier et un ordre de remise à zéro est adressé à toutes les trémies. Il parvient à une trémie particulière (celle dont le circuit est représenté sur la figure) par les entrées 16 du circuit NAND 7.

Lorsque la trémie la moins pleine a été déterminée par son circuit de sélection, l'ordre d'alimentation est donné par son relais 12. Cet ordre d'alimentation est gardé en mémoire pendant une durée prédéterminée, de l'ordre de quelques minutes par exemple, et réglable au moyen d'un circuit extérieur non représenté mais classique. Pendant cette durée, l'ordre d'alimentation reste valable même si une autre trémie devient moins chargée. Ce n'est qu'à la fin de la durée prédéterminée d'alimentation de la trémie qu'un nouveau cycle d'exploration est effectué pour déterminer la nouvelle trémie la moins chargée qu'il convient de remplir en priorité.

L'invention a été décrite dans le cas particulier de trémies, il va de soi qu'elle s'applique aussi bien aux silos ou réservoirs quelles que soient leurs dimensions.

## Revendications

1. Dispositif de sélection et d'alimentation automatique de réservoirs d'un ensemble de stockage temporaire de produits pulvérulents ou granuleux, comportant un détecteur associé à chaque réservoir, ledit détecteur délivrant un signal d'information de niveau, une pluralité de circuits électroniques de sélection comprenant un comparateur (2), et un circuit (5, 6) susceptible de délivrer un ordre d'alimentation au réservoir sélectionné, caractérisé en ce qu'il comporte : pour chaque réservoir, d'une part, un des circuits de sélection comprenant un intégrateur (1) d'une tension stabilisée délivrant un signal en dent de scie, le signal précité délivré par chaque intégrateur (1) ayant la même pente, le comparateur (2) sus-mentionné dudit circuit de sélection comparant ledit signal en dent de scie et le signal d'information de niveau en provenance du réservoir associé et, d'autre part, un circuit (5, 6) précité susceptible de délivrer un ordre d'alimentation au réservoir associé et consistant en un dispositif logique à bascule ; et pour l'ensemble des réservoirs, un circuit de type NAND (7), présentant autant d'entrées qu'il y a de réservoirs, susceptible d'adresser à tous les circuits de sélection un signal d'inhibition lorsqu'un seul comparateur (2) a déclenché.

2. Dispositif selon la revendication 1, caractérisé en ce que le détecteur délivrant un signal d'information de niveau est constitué par un dispositif de pesage.

3. Dispositif selon la revendication 1, caractérisé en ce que le circuit logique comprend une bascule monostable (5) délivrant un signal au circuit de type NAND (7) et une bascule bistable (6) délivrant à un relais (12) l'ordre d'alimentation du réservoir.

4. Dispositif selon la revendication 3, caractérisé en ce que la bascule bistable (6) reçoit des signaux d'inhibition particuliers audit réservoir par l'intermédiaire d'un contact (14).

5. Dispositif selon la revendication 4, caractérisé en ce que les signaux d'inhibition particuliers audit réservoir assurent par l'intermédiaire d'une porte électronique de type NAND (11) la remise à zéro de l'intégrateur (1) dudit circuit de sélection.

## Claims

1. Device for selecting and automatically feeding reservoirs of a temporary storage assembly for pulverulent or granular products, the device comprising a detector associated with each reservoir, the said detector delivering an information signal concerning the level, a plurality of electronic selection circuits comprising a comparator (2), and a circuit (5, 6) capable of delivering a command to feed the selected reservoir, characterised in that the device comprises, for each reservoir, firstly one of the selection circuits comprising an integrator (1) of a stabilised voltage, delivering a sawtooth signal, the said signal delivered by each integrator (1) having the same slope and the abovementioned comparator (2) of the said selection circuit comparing the said sawtooth signal and the information signal concerning level, coming from the relevant reservoir, and, secondly, an abovementioned circuit (5, 6) capable of delivering a command to feed the relevant reservoir and consisting of a flip-flop logic device, as well as, for all the reservoirs together, a circuit of the NAND type (7) which has as many inputs as there are reservoirs, and capable of addressing a disabling signal to all the selection circuits when only one comparator (2) has been triggered.

2. Device according to claim 1, characterised in that the detector delivering an information signal concerning level consists of a weighing device.

3. Device according to claim 1, characterised in that the logic circuit comprises a monostable flip-flop (5) which delivers a signal to the circuit of the NAND type (7), and a bistable flip-flop (6) which delivers the command to feed the reservoir to a relay (12).

4. Device according to claim 3, characterised in that the bistable flip-flop (6) receives the disabling signals specific to the said reservoir via a contact (14).

5. Device according to claim 4, characterised in that the disabling signals specific to the said reservoir ensure, via an electronic gate of the NAND type (11), that the integrator (1) of the said selection circuit is reset to zero.

## Ansprüche

1. Vorrichtung zum Auswählen und zur automatischen Beaufschlagung von Behältern einer Behältergesamtheit für die vorübergehende Speicherung von pulverförmigem oder granulatförmigem Gut, bei der jedem Behälter ein Fühler zugeordnet ist, der ein Füllstandssignal liefert, mit einer Vielzahl von elektronischen Auswahlschaltungen, die einen Vergleicher (2) enthalten, und mit einer Schaltung (5, 6) die einen Beaufschlagungsbefehl an den ausgewählten Behälter liefert, dadurch gekennzeichnet, daß sie folgendes aufweist : Für jeden Behälter zum einen eine der Auswahlschaltungen mit einem eine stabilisierte Spannung integrierenden, eine Sägezahnsignal liefernden Integrator (1), wobei das genannte, von jedem Integrator (1) gelieferte Signal die gleiche Steigung aufweist und der oben genannte Vergleicher (2) der Auswahlschaltung das Sägezahnsignal mit dem aus dem zugehörigen Behälter kommenden Füllstandssignal vergleicht, zum anderen eine oben genannte Schaltung (5, 6), die einen Beaufschlagungsbefehl an den zugehörigen Behälter liefert und eine logische Kippschaltung enthält ; sowie für die Gesamtheit der Behälter ein NAND-Glied (7) mit ebensovielen Eingängen wie Behälter vorhanden sind, das an alle Auswahlschaltungen ein Sperrsignal liefert, wenn ein einziger Vergleicher (2) angesprochen hat.

2. Vorrichtung nach Anspruch 1, dadurch gekennzeichnet, daß der das Füllstandssignal liefernde Fühler aus einer Wägeeinrichtung besteht.

3. Vorrichtung nach Anspruch 1, dadurch gekennzeichnet, daß die logische Schaltung eine ein Signal an das NAND-Glied (7) liefernde monostabile Kippschaltung (5) und eine bistabile Kippschaltung (6) enthält, die an ein Relais (12) den Befehl zur Beaufschlagung des Behälters liefert.

4. Vorrichtung nach Anspruch 3, dadurch gekennzeichnet, daß die bistabile Kippschaltung (6) über einen Kontakt (14) für den Behälter spezifische Sperrsignale erhält.

5. Vorrichtung nach Anspruch 4, dadurch gekennzeichnet, daß die für den Behälter spezifischen Sperrsignale über eine elektronische Torschaltung von der Art eines NAND-Gliedes (11) die Nullstellung des Integrators (1) der Auswahlschaltung bewirken.

1